# EUROPEAN PATENT APPLICATION

(11) **EP 1 847 311 A1**
(43) Date of publication of application: **24.10.2007**
(21) Application number: 06112764.3
(22) Date of filing: 19.04.2006
(51) Int. Cl.: B01D 71/02, C01B 13/02, H01M 8/12, B01J 19/24

(54) **Composite Membrane**

(71) Applicant: Universität Hannover, 30167 Hannover (DE)
(72) Inventor: Caro, Jürgen, 13129, Berlin (DE); Wang, Haihui, 30159, Hannover (CN); Noack, Manfred, 12683, Berlin (DE); Kölsch, Peter, 12524, Berlin (DE); Kapteijn, Freek, 2628 BL, Delft (NL); Kannelopolous, Nick, 15310, Athen (GR); Nolan, John, 15772, Athen (GR)
(74) Representative: Taruttis, Stefan Georg

(57) **Abstract**

The present invention relates to composite ceramic membranes for use in chemical processes such as the separation of molecules, sometimes referred to as molecular sieving, preferably in combination with chemical conversion of molecules selected from a composition of different molecules, e.g. the selective partial or full oxidation. The composite membrane of the invention offers a combination of molecular sieving and oxygen transport that makes the composite membrane suitable for the selective oxidation of hydrocarbons from a feed comprising a mixture hydrocarbons. The composite membrane of the invention comprises a first layer containing an oxygen transporting material (OTM), e.g. perovskite, and, in association with the first layer, a second layer, containing a molecular sieve layer, e.g. a zeolite.

## Description

The present invention relates to composite membranes from inorganic compounds, e.g. ceramics, for use in chemical processes such as the separation of molecules, sometimes referred to as molecular sieving, preferably in combination with chemical conversion of molecules selected from a composition of different molecules, e.g. the selective partial or full oxidation.

For separating molecules from liquid or gaseous fluids, a large variety of zeolite membranes is known, which are suitable for separating molecule species according to their size and/or hydrophilicity. An overview of zeolite membranes is given in Caro et al., Microporous and mesoporous materials 38, 3-24 (2004).

US 6,177,373 B1 describes synthesis of molecular sieve membranes on a support, the molecular sieve properties being provided by a thin layer of zeolites, e.g. MFI by hydrothermal growth starting from discrete microcristals of the molecular sieve material attracted to the surface substrate by charge interactions. It is described in general that the molecular sieve film can be provided with catalytic properties by bonding or incorporation of a catalyst to or into the support or the free surface of the molecular sieve film. The disclosure and examples only refer to crystalline silicon substrates, alumina and quartz substrates, a carbon fiber substrate, a γ-/ α-aluminum oxide membrane, a tantalum substrate, but no catalytic material.

WO 01/96106 relates to composite zeolite membranes, wherein zeolite particles are linked through a covalent bond or a coordinating bond to a substrate, the bond being provided by a linker substance forming bonds between both the zeolite and the support. Composite membranes with catalytically active substrate compositions are not disclosed.

US 5,763,347 discloses a zeolite layer supported on a variety of substances, e.g. stainless steel, alumina, silica zeolite and carbon. As a general hint, it is mentioned that these composite materials can be provided with catalytic functions by incorporating e.g. a catalytically active metal such as group VIII metals into the zeolite layer and/or within the support layer.

US 6,090,289 discloses a composite membrane comprising a support, an intermediate layer and an upper layer, the intermediate layer comprising a crystalline molecular sieve having crystal sizes below 1 µm, the upper layer comprising crystalline molecular sieve materials having a size above 1 µm. The specifically disclosed membrane comprises an α-alumina substrate, onto which an MFI- zeolite layer was hydrothermally synthesized, comprising both the intermediate and the upper layers.

Independent from the gas-permeable zeolite membranes, oxygen transporting materials are known, which can be used for forming membranes suitable for selective oxidation reactions. A prominent member of oxygen transporting materials is perovskite, which is essentially gastight but selectively allows transport of both electrons and oxygen ions, resulting in the selective transport of oxygen according to a gradient in its partial pressure. For other species than oxygen, perovskite membranes are gastight. Since ceramic membranes of perovskite provide for mixed ionic - electronic conductivity, selectively allowing the transport of oxygen molecules from a gas mixture, they are used for high temperature gas separation and selective oxidation of light hydrocarbons to synthesis gas or oxygenates.

A process for producing hollow fiber elements from perovskite is described in Liu et al., Ind. Eng. Chem. Res. 44, 7633-7637(2005), starting from perovskite or its precursor powder, formulating the perovskite in a polymer solution for subsequent extrusion, completing gelation of extruded tubes, followed by drying, heating and sintering.

A typical application of perovskite membranes for air separation is decribed in Tan et al., AIChE Journal 51, 1991-2000 (2005).

Further, oxygen transporting materials (OTMs) are in use for the partial oxidation of methane (POM) to syngas (CH₄ + ½ O₂ → CO + 2 H₂). Using a Ba_{0.5}Sr_{0.5}Co_{0.8}Fe_{0.2}O_{3-δ}-perovskite, additionally modified with a nickel-based steam reforming catalyst, the conversion of methane from a feed stream of 80% methane / 20% helium could be improved to 94% with a selectivity for CO of 95% (Wang et al., Catal. Today, 82, 157 (2003)). Improved stability of the perovskite membrane for syngas production could be obtained with a perovskite of the composition BaCo_{0.4}Fe_{0.4} Zr_{0.2}O_{3-δ} (Tong et al., J. Membr. Sci., 203, 175 (2002)).

In these partial oxidation of methane - reactions, the OTM membranes offer the benefit of a direct contacting surface on which the oxidation reaction occurs, e.g. for ethane to ethene according to C₂H₆ + ½ O₂ → C₂H₄ + H₂O, the membrane avoiding the formation of carbon oxides which would occur in a direct gaseous reaction between ethane and gaseous oxygen. This catalytic property of the OTM surface is supported by the oxygen transport through the OTM material, which is otherwise gastight. As a result, higher olefin selectivities can be achieved, i.e. higher yields and selectivities in the oxidative dehydrogenation using the OTM - membrane in comparison to classical co-fed fixed bed reactors.

A further use for OTM materials is in the oxidative coupling of short-chain alkanes, e.g. methane, to higher hydrocarbons according to the reaction 2 CH₄ + ½ O₂ → C₂H₆ + H₂O and 2 CH₄ + O₂ → C₂H₄ + 2 H₂O. However, satisfactory yields and selectivities have hitherto only been achieved with very diluted feed streams (2% methane in helium, C₂- yields of 35%, C₂- selectivity of 54% using a tubular Bi_{1.5}Y_{0.3}Sm_{0.2}O_{3-δ} - membrane). In comparison, a feed of pure methane resulted in yields of C₂ at only about 1%. Typical data for C₂ selectivities are in the order of 70 to 90% for a methane conversion below 10%, using diluted feeds.

Apart from the low yields in non-diluted feed streams, a further disadvantage of known OTM-membranes is that all components of a multi-component gas mixture, e.g. a hydrocarbon mixture can approach, adsorb to and enter the OTM surface and become oxidized without any selectivity. Due to the comparatively high temperatures of 500 to 850 °C, the selectivity of the partial oxidation is very poor for different components.

### Objects of the invention

In view of the above single layer and composite membranes supported on non-catalytic materials, the present invention seeks to provide alternative and, preferably, improved membrane materials, suitable for selective oxidation processes, for example of small molecule species from a mixture of hydrocarbons.

Further, the present invention seeks to provide a production process for improved membranes, suitable for selective oxidation of hydrocarbons.

Further, the present invention aims at providing an improved process for the partial or complete selective oxidation of hydrocarbons, especially to the partial oxidation of methane to methanol and synthesis gas comprising carbon monoxide and hydrogen, to the selective oxidation of methane and/or ethane from a mixture of hydrocarbons to methanol and ethylene, respectively, and to the total oxidation of methane to carbon dioxide and water, useful for example in a solide oxide fuel cell.

### General description

The present invention achieves the above-mentioned objects by providing a composite membrane and a production process for producing the composite membrane, offering a combination of molecular sieving and oxygen transport that makes the composite membrane suitable for the selective oxidation of hydrocarbons from a feed comprising a mixture of hydrocarbons.

The composite membrane of the invention comprises a first layer containing an oxygen transporting material (OTM), e.g. perovskite, and, in association with the first layer, a second layer, which is a molecular sieve layer, e.g. a zeolite.

The composite membrane material of the invention combines both the properties of molecular sieving of the zeolite material, e.g. selective adsorption and permeation of molecule species from a feed stream mixture according to their dynamic diameter, hydrophilicity or other characteristics, and as a consequence of its OTM - component, the full or partial oxidation of the selected molecule species.

As a result, the composite membrane according to the invention offers a high selectivity in combination with high yields and high conversion rates, preferably even for essentially non-diluted feed streams. When used for the partial oxidation of hydrocarbons, the high selectivity and yields can be obtained with respect to desired molecule species comprised in a feed stream of a mixture of hydrocarbons.

Suitable materials for forming the OTM - component of the inventive composite membrane can be selected from fluorite (AO₂), Brownmillerite (A₂B₂O₅), pyrochlore (A₂B₂O₇), and preferably, perovskite (ABO₃). The compositions of perovskites for use in the present invention are not limited when they allow for selective oxygen transport. As examples, the compositions Ba(Co, Fe, Zr)O_{3-δ} can be used. Perovskites of the compositions La_{0.2}Ba_{0.8}Fe_{0.8}Co_{0.2}O_{3-δ}, BaCo_{0.4}Fe_{0.4}Zr_{0.2}O_{3-δ} and are preferred, as well as perovskite compositions, wherein the B-position is at least partially replaced with a bivalent cation having a constant oxidation level and not containing cobalt, wherein the bivalent cation preferably selected from Sn²⁺, Ni²⁺, Cu²⁺, Cd²⁺, Pd²⁺, Zn²⁺ and mixtures of these, e.g. for use in POM reactors. The perovskite can have a composition of Ba_{0.4-0.6}Sr_{0.4-0.6}Fe_{0.7-0.9}Zn_{0.1-0.3}O_{3-δ} with Ba_{0.5}Sr_{0.5}Fe_{0.8}Zn_{0.2}O_{3-δ} being most preferred. E.g. for oxidative dehydrogenation of ethane, perovskites Ba_{0.5}Sr_{0.5}Co_{0.8}Fe_{0.2}O_{3-δ} and Bi_{1.5}Y_{0.3}SmO₃ can be used. Perovskites Bi_{1.5}Y_{0.3}Sm_{0.2}O_{3-δ}, LaSrCoFeO_{3-δ}, LaBaCoFeO_{3-δ}, LaSrCoFeO_{3-δ}, and BaCeGdO_{3-δ} of different chemical compositions can e.g. be used in the oxidative coupling of methane to higher hydrocarbons.

The molecular sieve layer of the composite membrane, preferably a zeolite, can be formed of MFI, AFI, AEL, BEA, CHA, EUO, FAU, FER, KFI, LTA, LTL, MAZ, MOR, MEL, MTT, MTW, OFF, TON. For the purposes of this invention, the term zeolite is used to comprise aluminum phosphates, e.g. AFI.

It has been found surprisingly that according to the invention, the composite membranes comprising a first layer having OTM - properties and a second layer containing a molecular sieve layer can be generated such that the composite membrane has two distinct phases, e.g. the molecular sieve zeolite layer is closely associated with, but structurally distinct from the OTM - layer.

The process for producing the composite membranes according to the invention in the first step comprises the generation of the first layer containing, preferably consisting of an OTM, e.g. shaped as a disc, tube, capillary tube, fiber or monolith, followed by growing the molecular sieve second layer onto the first layer, making use of seeding crystals during the growth of the second layer under hydrothermal conditions, followed by drying and calcination. The second layer is synthesized at least onto one face of the first layer material, or on both faces thereof. In the case of a flat, e.g. disc-shaped membrane, at least one surface side is provided with the second layer. For tubular, e.g. hollow fiber shapes, at least one of the outside and the inside surface of the first layer material is associated with the second layer material. Further, both sides of the first layer material can be provided with an associated second layer, resulting in a composite membrane having three associated but distinct layers, namely the first layer OTM, with second layers associated with both opposite surfaces. For tubular shapes, both inner and outer surfaces of the first layer material are associated with second layers, and for disc-shaped membranes, both planar surfaces. In these embodiments, the oppositely arranged second layers can be the same or different molecular sieve materials and can have the same or different layer thicknesses.

The beneficial properties of the inventive composite membrane in selective oxidation reactions of molecule species from a mixture, are presently assumed to be due to the molecular sieve layer which provides a separation of the multi-component gas phase that is used as the feed, from the reactive surface of the OTM. Further, the porosity and/or hydrophilicity of the molecular sieve layer is assumed to provide for the selection of gaseous components from the feed stream, allowing only certain molecule species to become oxidized with oxygen from transported by the OTM. For example, it has been found that molecules within a hydrocarbon mixture which have a kinetic diameter above a limit are excluded from reaction with oxygen. This limit of the kinetic diameter of molecules is determined by the molecular sieve layer and can be adjusted by synthesizing the second layer into a structure providing the pore size which defines the exclusion limit.

The oxygen for the conversion of the selected molecule species could be lattice oxygen, or molecular oxygen released from the OTM, allowing oxidative reactions to take place on the surface of the OTM layer and/or within the molecular sieve layer, respectively.

Another use of the composite membrane is for solid oxide fuel cells, namely as the anode. In this embodiment, gas mixtures can be used as fuel, and the composite membrane selectively oxidizes small molecules, i.e. having a kinetic diameter below the exclusion limit of the second layer, e.g. hydrogen, CO and/or methane. Accordingly, the present invention also provides for oxidation reactors containing a composite membrane according to the invention, e.g. reactors for POM, partial oxidation of ethane, oxidative coupling reactions of hydrocarbons, ammonia oxidation, fuel cells, preferably solid oxide fuel cells.

As a further embodiment of the molecular sieve second layer material, the molecular sieve material can be doped with cations that promote oxidation, e.g. vanadium⁵⁺ or titanium⁴⁺. This modification in addition to the shape selective molecular sieving leads to oxidation within the second layer material, providing further catalytic activities of the composite membrane.

### Detailed description

In the alternative to OTM having mixed oxygen ion and electron conductivity, e.g. perovskite, fluorite, Brownmillerite or pyrochlore type structures, solid oxide fuel cell materials, e.g. yttria stabilized zirconia (YSZ) and scandia stabilized zirconia (ScSZ) can be used, as well as perovskite compositions without electronic conductivity but having sufficient oxygen ion conductivity such as Sr/Mg doped lanthanum gallate, or a solid electrolyte material with oxygen ion flux of medium transport activity can be used, preferably assisted by a means for electro - chemical pumping.

This first layer is coated with the second layer, having molecular sieve properties, e.g. shape selectivity and/or interaction selectivity such as hydrophilic-hydrophobic selectivity, which second layer is stable thermally and hydrothermally at a range of approximately 500 to 850 °C.

In order to have the second layer control the access of feed components to the oxidative region, i.e. the surface of the OTM for oxidation with the lattice oxygen transported through the OTM, or to the interstices of the second layer for reaction with molecular oxygen released from the OTM surface, the pore size of the second layer must be sufficiently small to control access of the desired feed components, preventing larger compounds from becoming oxidized. This prerequisite of the second layer is met within the composite membranes according to the invention.

The process for producing the composite membrane of the invention can be performed starting from the OTM, synthesized and calcined and sintered into the final desired shape, e.g. as a disc, tube, capillary tube, fiber or monolith. This shaped OTM forms the first layer of the composite membrane, onto which the second layer is crystallised using nanocrystals of the desired molecular sieve layer as seed crystals. The nanocrystals are produced by crystallisation *ex situ,* following established procedures. These nanocrystals are adhered to the surface of the shaped OTM using electrostatic forces. For an improvement of electrostatic attraction, positively charged polymers, e.g. polyDADMAC (poly-diallyl-dimethylammoniumchloride) can be adsorbed to the surface of the shaped OTM, providing the surface with a positive charge. When generating the second layer siliceous compounds, the corresponding nanocrystals can be provided with a negative surface charge at the relevant pH value, e.g. by adjusting the pH to a value of or above 5. Consequently, the oppositely, e.g. negatively charged siliceous seed crystals are attracted to the positively charged OTM surface. This adsorption process of the seed nanocrystals onto the OTM surface can be controlled, e.g. by measuring the surface charges. Surface charges can be determined using a Malvern Zeta Sizer.

When the shaped OTM is provided with molecular sieve seed nanocrystals attached to its surface from an aqueous solution, it is dried at elevated temperatures, e.g. up to 500 °C. Subsequently, the seed crystals attached to the OTM surface are grown under hydrothermal conditions at temperatures between approximately 100 °C and 200 °C, using a precursor solution to the second layer in autoclaves. Preferably, hydrothermal crystal growth is performed until a continuous molecular sieve layer is generated on the shaped OTM surface.

The invention is now described in greater detail by way of examples with reference to the figures, wherein
- Figure 1 shows the measurement of the Zeta potential of BZFZ perovskite powder, (1-5 µm particle size) in water at room temperature using the Malvern Zeta Sizer,
- Figure 2 shows an electron micrograph of silicon dioxide molecular sieve seed crystals of MFI type silicalite 1 on the surface of a disc shaped Ba(CoFeZr)O_{3-δ} perovskite membrane after calcination at 400°C,
- Figure 3 shows a cross-sectional electron micrograph of an MFI type silicalite 1 molecular sieve layer on a disc shaped Ba(CoFeZr)O_{3-δ} perovskite,
- Figure 4 shows an MFI type silicalite 1 molecular sieve layer on a disc-shaped Ba(CoFeZr)O_{3-δ} perovskite,
- Figure 5 A shows a scanning electron micrograph of the cross-section of the perovskite membrane (reference numeral 1) having a top layer of MFI type silicalite 1 (reference numeral 2),
- Figure 5 B shows an energy dispersive X-ray spectrum (EDXS) of the central boxed region of Figure 5 A,
- Figure 6 shows an EDXS mapping of the individual elements of the boxed region in Figure 5 A,
- Figure 7 shows X-ray diffraction (XRD) patterns of the BCFZ disc membrane (a) and of a BCFZ disc membrane after coating with molecular sieve MFI type silicalite 1 (b),
- Figure 8 shows XRD patterns of BCFZ hollow fibers (a) and of BCFZ hollow fibers after coating with molecular sieve MFI type silicalite 1 (b).

### Example 1: Preparation of first layer comprising OTM

As the first layer of the composite membrane, a disc membrane is pressed from perovskite (Ba(CoFeZr)O_{3-δ}) by first pressing the perovskite powder at a pressure of 10⁴ bar/cm², to a disc shape having about 1 mm thickness. After pressing, sintering at or above 1200 °C is performed for densification to approximately 96% of the theoretical density.

This first layer membrane component is impermeable for all gases except oxygen. This disc-shaped first layer shows an oxygen flux of 1 mL/min cm² at 850 °C when measured using sweep gas. Decreasing the oxygen partial pressure difference across the first layer membrane component disc, which is the driving force for permeation, permeation is decreased. In contrast, by presence of methane in catalytic reactor experiments, the driving force for oxygen permeation is increased and, accordingly, oxygen flux is increased, amounting up to 3 mL/min cm², when measured for this first layer membrane component.

The generation of the second layer molecular sieve layer on at least one surface of the first layer OTM membrane component is preferably achieved using seed crystals of the molecular sieve layer material. In this example, a pure silicon dioxide MFI type silicalite 1 layer is generated as a shape selective second layer by seed crystal supported synthesis. MFI type silicalite 1 nanocrystals to be used as seed crystals are prepared *ex situ* according to standard procedures. These nanocrystals are adsorbed to the surface of the disc shaped first layer membrane component.

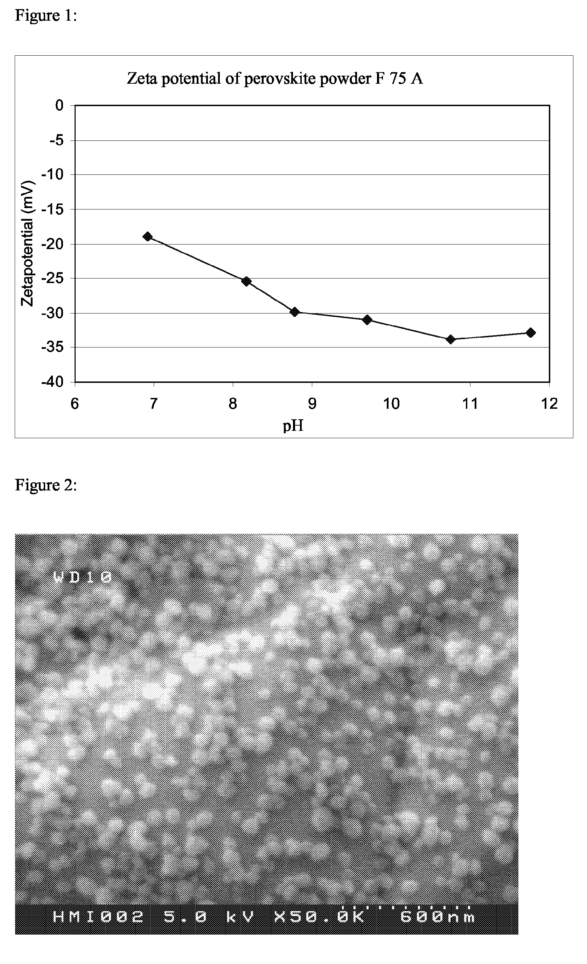

Measurements of the Zeta potential of the powderized perovskite material (1-5 µm particle size) using a Malvern Zeta Sizer 3000 HAS in an aqueous dispersion at room temperature at various pH values shows that the perovskite material has a negative surface charge. Measurement results are shown in Figure 1. As the MFI type silicalite 1 molecular sieve seed crystals also have negative surface charges, it is preferred to use a polymer, e.g. polyDADMAC for adsorption to the first layer membrane component to reverse the surface charge thereof. Accordingly, the disc-shaped perovskite membrane was treated with an aqueous solution of polyDADMAC for surface adsorption, removed from the polyDADMAC solution and immersed into an aqueous solution containing the molecular sieve seed crystals at room temperature. The seed crystals become electrostatically adsorbed to the surface of the disc-shaped perovskite membrane, as can be seen in Figure 2. In Figure 2, an electron micrograph onto the surface of the perovskite membrane adsorbed with seed crystals is shown after calcination at 400 °C.

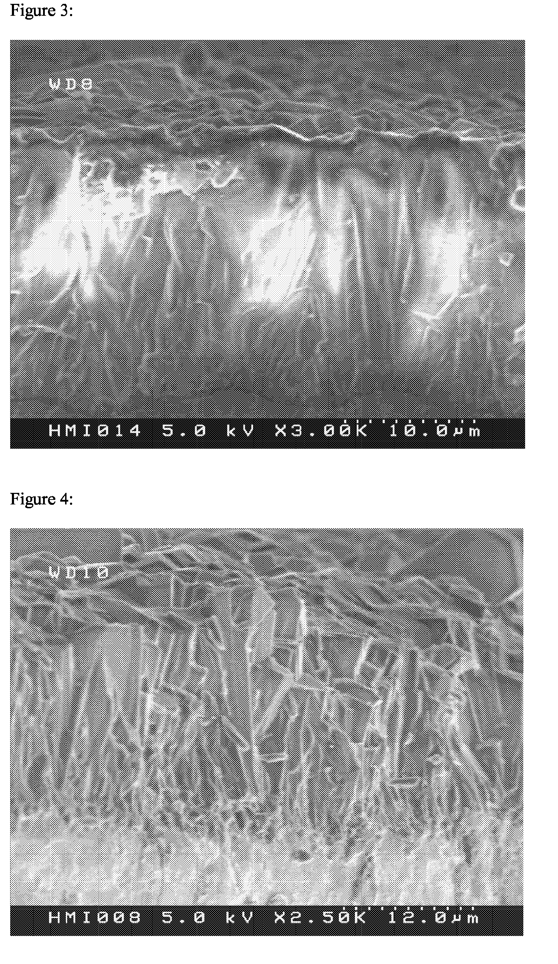

Following the drying and calcination of the first layer perovskite membrane with the molecular sieve seed crystals at 400 °C, a hydrothermal synthesis is performed to grow a continuous MFI type silicalite 1 molecular sieve second layer, using a synthesis solution of 100 SiO₂ x 9 TPAOH x 2200 H₂O in teflon lined stainless steel autoclaves at 180 °C for 24 hours. As the silica source, commercially available Levasil, an aqueous, colloidal silica sol or freshly hydrolyzed tetraethoxysilane (98%, available from Merck, Darmstadt) was used. For preparation of the synthesis solution, the template tetrapolyammonium bromide/hydroxide (TPAOH) and water were mixed at room temperature, slowly adding the silica source with part of the water under stirring at room temperature. This synthesis solution is left for aging without motion for about one hour. The previously prepared first layer OTM component membranes (perovskite) with the MFI type silicalite 1 molecular sieve seed crystals attached were arranged in the autoclaves and the synthesis solution added. The autoclaves were heated in an oven to a constant temperature of 180 °C for crystallisation. After 24 hours, the autoclaves were cooled to room temperature and opened. The resulting first layer membrane component, now covered with second layer molecular sieve material in the form of an MFI type silicalite 1 overgrowth was rinsed with water for several times, then dried at 100 °C. The TPAOH template was burnt out by heating to 400 °C at a rate of 0.3 °C/min, keeping at 400 °C in air for 5 hours, then slowly cooling down to room temperature over 5 hours. The EDX analysis gives clear evidence that the OTM first layer component was directly associated, e.g. attached to a second layer, namely silicalite 1 having an MFI structure. Scanning electron microscopy showed that the disc-shaped perovskite membranes were coated with a dense MFI type silicalite 1 layer having thickness of 25 µm. Electron micrographs are shown in Figure 3, for the aqueous colloidal silica sol (Levasil) and freshly hydrolyzed TEOS in Figure 4, used as the silicon dioxide source, respectively.

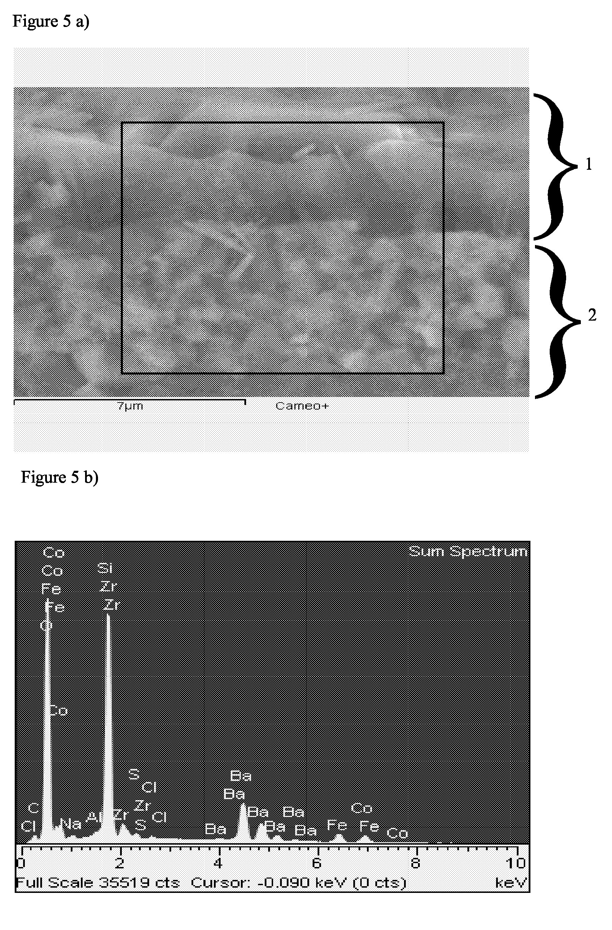

Scanning electron microscopic pictures of the cross-section is shown in Figure 5a), the perovskite first layer as indicated by reference No. 1, in close association with the second MFI type silicalite 1 layer, indicated by reference No. 2. The boxed region was analysed by energy dispersive X-ray spectroscopy (EDXS), shown in Figure 5b), which demonstrates that no cation migration between the first layer perovskite and the second layer MFI type silicalite 1 occurred. These results show that only the elements can be found that form part of the first layer material and of the second layer material, namely perovskite and silicalite 1, respectively. Traces of sodium, chloride, aluminum and carbon were found as impurities.

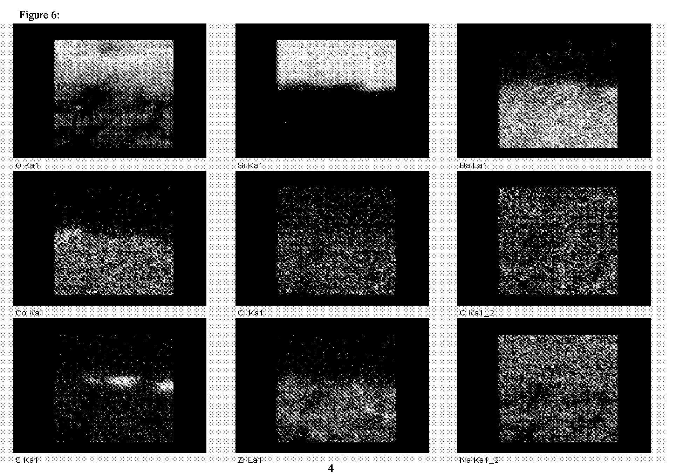

EDXS mapping is shown in Figure 6 for the individual elements, analyzing the boxed region shown in Figure 5a). These results demonstrate that the elements forming the first layer, perovskite, namely cobalt, iron, barium and zirconium are homogenously distributed across the first layer OTM. No segregation or transport of these elements into the silicalite 1 second layer can be observed. Further, no silicon from the molecular sieve second layer of silicalite 1 can be found in the first layer material, indicating a strict phase separation of the first layer material and the second layer material, although both layers are closely and directly associated to each other.

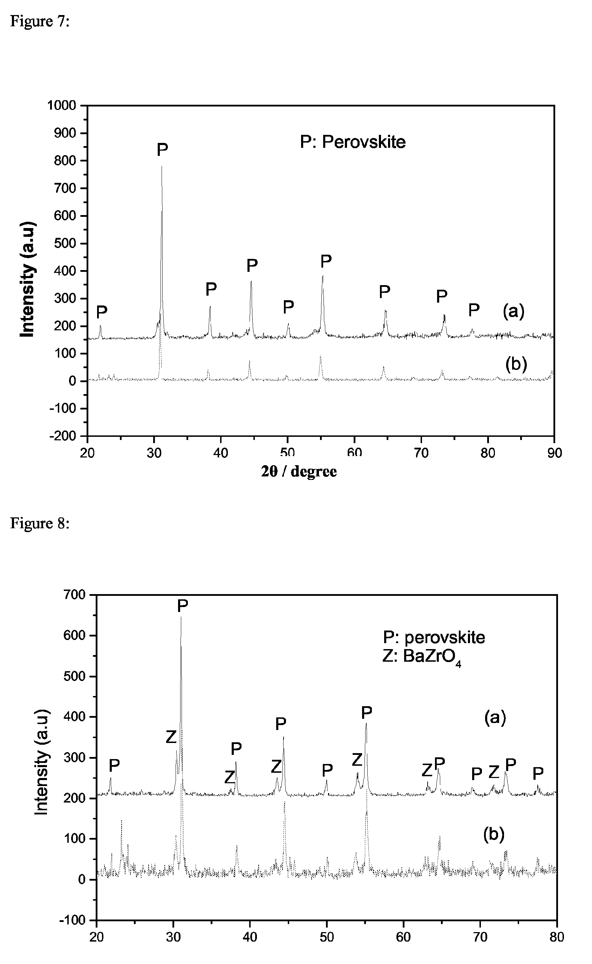

The XRD patterns of the BCFZ disc membrane is shown under (a) of Figure 7, the XRD pattern of the BCFZ disc membrane after coating with MFI under (b).

A further disc membrane was pressed from pure BCFZ perovskite, i.e. without the second layer material. When comparing the XRD patterns, it can be seen that the perovskite disc does not show additional peaks when covered with the second molecular sieve layer silicalite 1. The first layer OTM material, in this case perovskite, remains perovskite without change. XRD signals caused by the silicalite 1 can hardly be recognized.

### Example 2: Selective oxidation of hydrocarbons

As an example for a mixture of hydrocarbons, a feed of n-butane and isobutane was used for partial oxidation. Using the composite membrane produced in Example 1, a laboratory scale oxidation reactor was assembled, allowing the feed stream of hydrocarbons to pass on the membrane side formed by the second layer molecular sieve material, and air on the first layer perovskite surface side.

It was found that n-butane is selectively oxidized to syngas (CO, hydrogen), n-butene and hydrocarbons having a chain length below C4, resulting from coupling reactions of methyl radicals and methylene radicals, whereas the isobutane remained essentially unreacted. This result is believed to be caused by the smaller kinetic diameter of n-butane (0.43 nm) compared to the kinetic diameter of isobutane (0.50 nm), allowing the n-butane molecule to enter the molecular sieve layer in preference to isobutane. The pores of the molecular sieve layer of MFI were estimated to 0.55 nm.

### Example 3: Selective partial oxidation of small molecule hydrocarbons from a hydrocarbon mixture

The composite membrane obtained in Example 1 in the experimental setup according to Example 2 was used for the partial oxidation of an ethane/cyclohexane mixture. This partial oxidation yielded ethylene and syngas as well as the oxidative degeneration product of ethylene and, in parallel, the total oxidation product, carbon dioxide. Further, CO as well as methyl radicals are formed. This selectivity for ethane is believed to be due to the smaller kinetic diameter of ethane (0.40 nm), which is contrasted by the kinetic diameter of cyclohexane (0.60 nm), which is even larger than the pore size of the silicalite I molecular sieve layer (0.55 nm). As a consequence, cyclohexane remained essentially unreacted.

### Example 4: Synthesis of composite membrane comprising a molecular sieve layer second having DDR type structure

Following the general procedure laid out in Example 1, a DDR structure of type DD3R was crystallised on a Ba(CoFeZr)O_{3-δ} perovskite hollow fiber membrane. Using DD3R type seed crystals, the second layer was synthesized onto the outer surface of the perovskite hollow fibers following the procedure of Example 1. The pores of the second layer DD3R material was determined to have narrow pores of about 0.36 x 0.44 nm openings.

### Example 5: POM using gaseous hydrocarbon mixture

The composite membrane prepared in Example 4 was used in an experimental setup allowing a methane/cyclohexane feed stream on the outer surface of the tube-shaped membrane, i.e. contacting the second layer molecular sieve, whereas air was passed through the internal volume of the membrane. When measuring the reactants, it became clear that only methane was oxidized into syngas, part of which was totally oxidized to carbon dioxide and part of it generating methyl radicals that coupled to longer chain hydrocarbons by oxidative coupling. In contrast, cyclohexane remained essentially unreacted.

For the production of hollow fibres from first layer OTM material, a BCFZ perovskite powder was used, containing additional phase Z (BaZrO₄). XRD patterns of the BCFZ hollow fiber are shown in Figure 8, namely of the first layer hollow fiber component under (a) and after coating of the first layer OTM material with the second layer molecular sieve (MFI) under (b). The additional phase Z causes additional peaks in comparison to the otherwise identical material used for the disc-shaped membrane of Example 1.

When comparing XRD patterns of the first layer material before (a) and after synthesizing the second layer molecular sieve material (b), it becomes clear that no additional phases have been generated by the zeolite synthesis.

### Example 6: Selective oxidation of hydrogen from a hydrogen/hydrocarbon mixture

Using the experimental setup of Example 5, a feed stream of hydrogen/cyclohexane was used on the outside surface of the tube-shaped membrane and air on the inside.

The analysis showed that only hydrogen was oxidized and removed from the hydrocarbon containing feed stream, whereas cyclohexane remained essentially unreacted.

### Example 7: Oxidation of small gas molecules from a mixture of hydrocarbons and aromatic hydrocarbons

Using the experimental setup of Example 5, a feed stream of hydrogen, CO, methane, cyclohexane, benzene and toluene was used as an example for a hydrocarbon mixture of small molecules (hydrogen, CO, methane) with long-chain hydrocarbons and aromatic hydrocarbons.

Analysis showed that only hydrogen, CO and methane, having kinetic diameters below 0.38 nm, which could be regarded as the critical limit in this reaction, become oxidized. The other hydrocarbon molecules essentially remained unreacted, indicating that molecules with a kinetic diameter above 0.58 nm will not be oxidized using the composite membrane having a second layer molecular sieve of DDR structure type DD3R.

## Claims

1. Composite ceramic membrane for separation of gaseous compounds, **characterized by** comprising in association a first layer containing an oxygen transporting material having both electronic and oxygen ion transporting properties, and
a second layer containing a molecular sieve material on at least one surface of the first layer.

2. Composite ceramic membrane according to claim 1, **characterized in that** the oxygen transporting material is selected from the group comprising perovskite, fluorite, Brownmillerite, pyrochlore, yttria stabilized zirconia, scandia stabilized zirconia, and mixtures thereof.

3. Composite ceramic membrane according to claim 1, **characterized in that** the oxygen transporting material is a perovskite without electronic conductivity, which membrane is connected with a means for electro-chemical pumping.

4. Composite ceramic membrane according to one of the preceding claims, **characterized in that** the molecular sieve material is selected from the group of zeolites, MFI, AFI, AEL, BEA, CHA, EUO, FAU, FER, KFI, LTA, LTL, MAZ, MOR, MEL, MTT, MTW, OFF, TON, and mixtures thereof.

5. Process for producing a composite ceramic membrane, **characterized by** providing a formed shape comprising an oxygen transporting material as a first layer on at least one surface with a second layer of a molecular sieve material.

6. Process according to claim 5, **characterized by** providing the at least one surface comprising oxygen transporting material by first adhering seed nanocristals of the second layer molecular sieve material to its surface in an aqueous dispersion, drying the resultant oxygen transporting material, calcining, cooling, hydrothermally synthesizing the second layer molecular sieve material from the seed nanocrystals, and drying.

7. Process according to one of claims 5 or 6, **characterized in that** the oxygen transporting material is selected from the group comprising perovskite, fluorite, Brownmillerite, pyrochlore, yttria stabilized zirconia, scandia stabilized zirconia, a perovskite without electronic conductivity, and mixtures thereof.

8. Process according to one of claims 5 to 7, **characterized in that** the molecular sieve material is selected from the group of zeolites, MFI, API, AEL, BEA, CHA, EUO, FAU, FER, KFI, LTA, LTL, MAZ, MOR, MEL, MTT, MTW, OFF, TON, and mixtures thereof.

9. Reactor for oxidizing gaseous compounds, **characterized by** comprising a composite membrane according to one of claims 1 to 4.

10. Reactor according to claim 9, **characterized in that** the reactor is a fuel cell.

11. Process for oxidizing gaseous compounds, **characterized by** the use of a composite membrane according to one of claims 1 to 4.

12. Process according to claim 11, **characterized in that** the process is the selective partial oxidation of small molecule hydrocarbons from a mixture with hydrocarbons having a larger kinetic diameter.

13. Process according to claim 12, **characterized in that** the small molecule hydrocarbon is selected from the group comprising methane, ethane, propane, n-butane, and mixtures thereof.
